# EUROPEAN PATENT APPLICATION

(11) **EP 3 154 244 A1**
(43) Date of publication of application: **12.04.2017**
(21) Application number: 15877507.2
(22) Date of filing: 31.03.2015
(51) Int. Cl.: H04M 1/26

(54) **DUAL SYSTEM-BASED COMMUNICATION METHOD AND TERMINAL**

(30) Priority: 15.01.2015 CN 201510019604
(71) Applicant: Yulong Computer Telecommunication Scientific (Shenzhen) Co., Ltd., Shenzhen, Guangdong 518057 (CN)
(72) Inventor: YE, Ruiquan, Shenzhen Guangdong 518057 (CN); SUN, Guofeng, Shenzhen Guangdong 518057 (CN)
(74) Representative: Johnson, Richard Alan
(86) International application number: PCT/CN2015/075609
(87) International publication number: WO 2016/112589

(57) **Abstract**

The present invention provides a dual system-based communication method and a terminal. The method comprises: in a terminal having dual operating systems, binding information of each contact to a corresponding operating system; and in the situation that the dual operating systems operate simultaneously, when a communication is received, conducting communication in an operating system corresponding to a contact initiating the communication request. According to the present invention, basis data is isolated between two operating systems on the basis of contacts, information of each contact is bound to a corresponding operating system, and when a communication request is received, communication is conducted in an operating system corresponding to a contact initiating the communication request, so that an incoming call from a contact of a secure system is preferentially switched to a secure operating system for communication and it is ensured that relevant information is isolated and stored in the secure system.

## Description

### CROSS REFERENCE TO RELATED APPLICATIONS

This application claims the benefit of priority to Chinese Patent Application No.201510019604.5, filed on January 15, 2015 with the Patent Office of the People's Republic of China, and entitled "DUAL SYSTEM-BASED COMMUNICATION METHOD AND TEMRINAL", which disclosure is herein incorporated by reference.

### TECHNICAL FIELD

The present disclosure relates to the field of terminal communication technology, and particularly to a dual system-based communication method and a terminal.

### BACKGROUND

At present, there are some intelligent terminals with dual systems; however, the realization of communication based on a dual card dual standby function is not ideal. Implementation of the dual card dual standby function mainly includes the following two options.

Option 1, two subscriber identity module (SIM) cards can be used simultaneously in two operating systems, and when there is an incoming call, a system will be determined randomly to answer the call.

Option 2, contact-related functions are arranged in only one specific operating system, and the other operating system cannot be used.

The above solutions have the following defects.

As to option 1, if the same contact exists in the two systems, the user may be confused and has no idea about which system the contact belongs to, thus losing the security of protected data. As to option 2, it is inconvenient for the user to operate; for example, basic functions of terminal communication, including calls, short messages (SMS), need to be frequently switched to another system, and therefore, user experience is not good. Both the above two options have a security problem, and cannot meet the security needs of users.

### SUMMARY

The present disclosure aims to provide a dual system-based communication method and a terminal, so as to overcome the defect that poor user experience exists due to frequent switching to a specific operating system in communication of dual systems in the related art.

According to one aspect of the present disclosure, it is provided a dual system-based communication method, which includes:
in a terminal having dual operating systems, information of each contact is bound to a corresponding operating system; and
in the situation that the dual operating systems operate simultaneously, when a communication request is received, communication is conducted in an operating system corresponding to a contact initiating the communication request.

Still further, the source of the contact information includes: contact information stored in the dual operating systems, and contact information stored in a Subscriber Identity Module (SIM) card.

Still further, the process that the dual operating systems operate simultaneously includes: a virtual layer module is loaded by a boot loader; memory and hardware resources are allocated through the virtual layer module, so as to load and operate the dual operating systems.

Still further, the process that communication is conducted in the operating system corresponding to the contact initiating the communication request when the communication request is received includes the follows.

Among the dual operating systems, a first operating system is provided with a service module; the service module is configured to interact with both a first wireless interface adaptation layer module of the first operating system and a second wireless interface adaptation layer module of a second operating system; the service module is further configured to store a binding correspondence relationship between information of each contact and a corresponding operating system.

The communication request received is transmitted to the service module through the first wireless interface adaptation layer module of the first operating system by a module unit.

The service module judges whether the operating system bound to the contact initiating the communication request is the first operating system or the second operating system; if it is the first operating system, the service module will inform the first wireless interface adaptation layer module to invoke a communication module in the first operating system for communication; if it is the second operating system, the service module will inform, through the virtual layer module, the second wireless interface adaptation layer module to invoke a communication module in the second operating system for communication.

Still further, the first operating system is configured to be a standard operating system, and the second operating system is configured to be a secure operating system.

Still further, the method can further include: communication is conducted in the standard operating system if the communication request is received from a stranger.

The process that communication is conducted in the standard operating system if the communication request is received from the stranger includes: the module unit transmits the communication request sent from the stranger to the service module through the first wireless interface adaptation layer module of the standard operating system when the communication request is received; the service module determines that information of the stranger does not bound to any operating system and informs the first wireless interface adaptation layer module to invoke the communication module of the standard operating system for communication.

Still further, the type of the communication request includes an incoming call or a short message.

The contact information includes a contact phone number.

Still further, the module unit supports the following three operating modes: (1) single SIM card single standby mode; (2) dual SIM card dual standby mode; and (3) dual SIM card single standby mode.

The present disclosure further provides a terminal with dual operating systems.

The terminal includes: a memory, configured to store a binding correspondence relationship between information of each contact and an operating system, and in the binding correspondence relationship, information of each contact corresponds to one operating system; a processor, configured to communicate at an operating system corresponding to a contact initiating the communication request upon reception of the communication request, in the situation that the dual operating systems operate simultaneously.

Furthermore, the source of the contact information includes: contact information stored in the dual operating systems, and contact information stored in a SIM card.

Still further, the process that the dual operating systems of the dual operating system operate simultaneously includes: a virtual layer module is loaded by a boot loader; memory and hardware resources are allocated through the virtual layer module, so as to load and operate the dual operating systems.

Still further, the processor is configured to achieve the follows.

In the dual operating systems, a first operating system is provided with a service module; the service module interacts with both a first wireless interface adaptation layer module of the first operating system and a second wireless interface adaptation layer module of a second operating system; the service module stores a binding correspondence relationship between information of each contact and a corresponding operating system.

The communication request received is transmitted to the service module through the first wireless interface adaptation layer module of the first operating system by a module unit.

The service module judges whether the operating system bound to the contact initiating the communication request is the first operating system or the second operating system; if it is the first operating system, the service module will inform the first wireless interface adaptation layer module to invoke a communication module in the first operating system for communication; if it is the second operating system, the service module will inform, through the virtual layer module, the second wireless interface adaptation layer module to invoke a communication module in the second operating system for communication.

Still further, the first operating system is configured to be a standard operating system, and the second operating system is configured to be a secure operating system.

Still further, the processor is further configured to conduct communication at the standard operating system if the communication request is received from a stranger.

Still further, the processor is configured to achieve the follows.

When the communication request is received from a stranger, the module unit transmits the communication request to the service module through the first wireless interface adaptation layer module of the standard operating system; the service module determines that information of the stranger does not bound to any operating system and informs the first wireless interface adaptation layer module to invoke the communication module of the standard operating system for communication.

Still further, the type of the communication request includes an incoming call or a short message.

The contact information includes a contact phone number.

Still further, the module unit supports the following three operating modes: (1) single SIM card single standby mode; (2) dual SIM card dual standby mode; (3) dual SIM card single standby mode.

With the above-described technical solutions, the present disclosure can provide at least the following advantages.

According to the dual system-based communication method and the terminal, information of each contact is bound to a corresponding operating system. When a communication request is received, communication is conducted at an operating system corresponding to a contact initiating the communication request, such that an incoming call from a contact of a secure system is preferentially switched to a secure operating system for communication and it is ensured that relevant information is isolated and stored in the secure system. The present disclosure still has advantages of simple, safe, and easy to expand.

### BRIEF DESCRIPTION OF THE DRAWINGS

FIG. 1 is a flow chart illustrating a dual system-based communication method according to a first embodiment of the present disclosure.
FIG. 2 is a communication principle diagram according to the first embodiment of the present disclosure.
FIG. 3 is a flow chart illustrating a dual system-based communication method according to a second embodiment of the present disclosure.
FIG. 4 is a diagram illustrating the configuration of a terminal according to a third embodiment of the present disclosure.
FIG. 5 is a communication principle diagram according to a fourth embodiment of the present disclosure.
FIG. 6 is a diagram illustrating a secure call process of an intelligent terminal according to the fourth embodiment of the present disclosure.

### DETAILED DESCRIPTION OF ILLUSTRATED EMBODIMENTS

In order to further explain technical means for achieving the intended purpose of the present disclosure and effects achieved, the present disclosure will be described in detail below with reference to the accompanying drawings and embodiments.

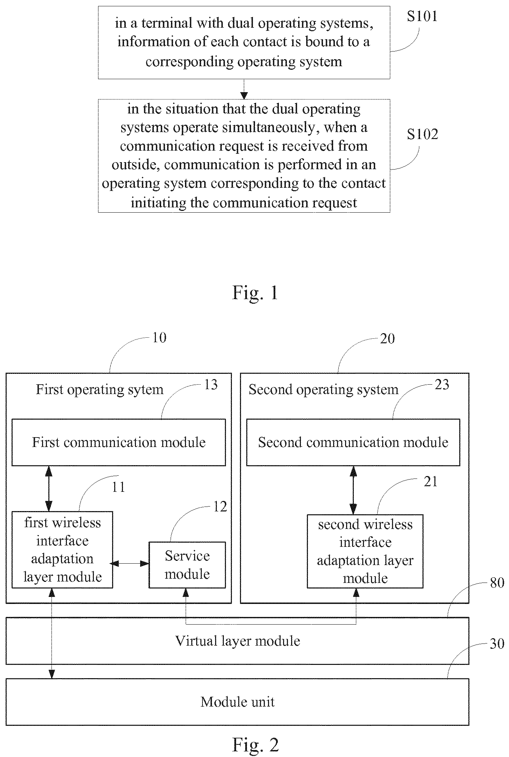

According to a first embodiment of the present disclosure, it is provided a dual system-based communication method. As illustrated in FIG.1, the method can include the following steps.

S101, in a terminal having dual operating systems, information of each contact is bound to a corresponding operating system.

As an implementation, the source of the contact information includes: contact information stored in each of the dual operating systems, and contact information stored in a SIM card. The contact information can include a contact phone number.

S102, in the situation that the dual operating systems operate simultaneously, when a communication request is received from outside, communication is conducted at an operating system corresponding to a contact initiating the communication request.

As an implementation, the process that the dual operating systems operate simultaneously includes the follows. A virtual layer module is loaded by a boot loader; memory and hardware resources are allocated by the virtual layer module, so as to load and operate the dual operating systems, such that the dual operating systems can operate simultaneously. At the same time point, only one operating system operates in the foreground for the user to use, while another operating system operates in the background.

Furthermore, in S102, the process that communication is conducted in the operating system corresponding to the contact initiating the communication request when the communication request is received from outside can include the follows.

In the dual operating systems of FIG.2, a first operating system 10 is provided with a service module 12; the service module 12 interacts with both a first wireless interface adaptation layer module 11 of the first operating system 10 and a second wireless interface adaptation layer module 21 of a second operating system 20; the service module 12 stores a binding correspondence relationship between information of each contact and a corresponding operating system.

When a communication request is received by a module unit 30, the module unit 30 can transmit the communication request to the service module 12 through the first wireless interface adaptation layer module 11 of the first operating system 10.

The service module 12 judges whether the operating system bound to the contact initiating the communication request is the first operating system 10 or the second operating system 20; if it is the first operating system 10, the service module 12 will inform the first wireless interface adaptation layer module 11 to invoke a first communication module 13 in the first operating system 10 for communication; if it is the second operating system 20, the service module 12 will inform, through the virtual layer module 80, the second wireless interface adaptation layer module 21 to invoke a second communication module 23 in the second operating system 20 for communication.

Still further, the type of the communication request includes an incoming call or a short message. The first communication module 13 and the second communication module 23 are of the same type and can be a telephone module or a short message module.

The module unit 30 can support the following three operating modes: (1) single SIM card single standby mode; (2) dual SIM card dual standby mode; (3) dual SIM card single standby mode.

According to a second embodiment of the present disclosure, it is provided a dual system-based communication method, which is substantially the same as the method of the first embodiment. The difference between the two methods is that, in S102 of the second embodiment, the first operating system 10 is configured to be a standard operating system, and the second operating system 20 is configured to be a secure operating system. Data with higher security requirements can be stored in the secure operating system, and data with lower security requirements or data for which a security level has not been determined can be stored in the standard operating system. The secure operating system can interact with the standard operating system through the virtual layer module, and these two systems cannot communicate directly. Since dual operating systems are realized based on the virtual layer module, the isolation of dual operating systems is realized based on the virtual layer module.

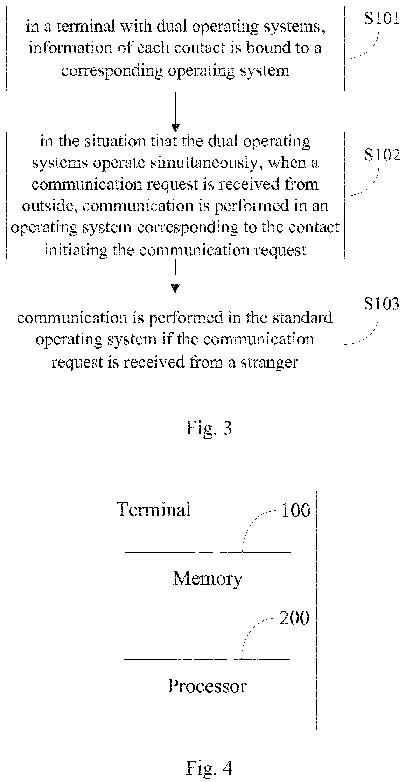

As illustrated in FIG.3, the dual system-based communication method according to this embodiment can further include: S103, communication is conducted in the standard operating system if the communication request is received from a stranger.

As an implementation, S103 can include the follows.

When the communication request is received from the stranger, the module unit transmits the communication request to the service module 12 through the first wireless interface adaptation layer module 11 of the standard operating system; the service module 12 judges that information of the stranger does not bound to any operating system and informs the first wireless interface adaptation layer module 11 to invoke the first communication module 13 of the standard operating system 10 for communication. Since it has not been determined whether the stranger is a secure user, the communication with the stranger is isolated from the secure operating system 20, and the security of information stored in the secure operating system 20 by local users can be ensured.

The first communication module 13 and the second communication module 23 are of the same type and can be a telephone module or a short message module.

It should be noted that, there is no strict sequence for the execution of S103 and S102, and the occurrence thereof depends on the originator of the communication request.

According to a third aspect of the present disclosure, it is provided a terminal having dual operating systems. The terminal can be understood as a physical device, and as illustrated in FIG.4, the terminal can include a memory 100 and a processor 200, among which the memory 100 is configured to store a binding correspondence relationship between information of each contact and an operating system, and in the binding correspondence relationship, information of each contact corresponds to one operating system respectively; the processor 200 is configured to communicate at an operating system corresponding to the contact initiating the communication request upon reception of the communication request, in the situation that the dual operating systems operate simultaneously.

The memory 100 is configured to store the blinding relationship set in S101 of the first embodiment and the second embodiment, and the function performed by the processor 200 corresponds in detail to the flow of S102 in the first embodiment or the second embodiment.

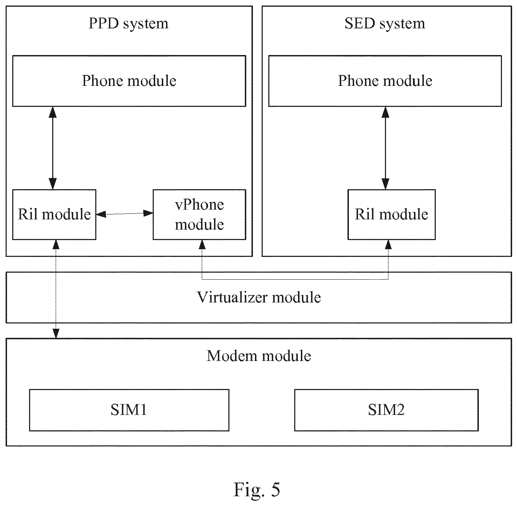

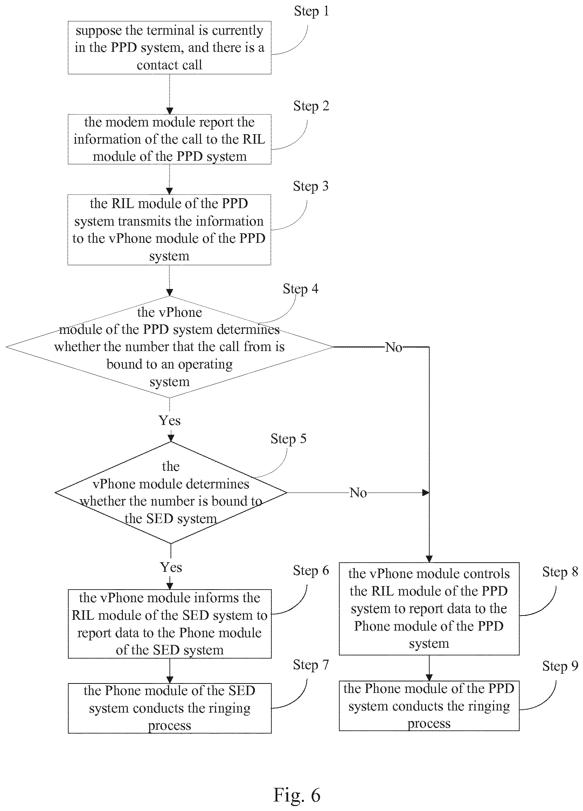

On the basis of the embodiments described above, and take dual operating systems include a standard operating system and a secure operating system as an example, according to a fourth embodiment of the present disclosure, an application example of the present disclosure will be described with reference to FIG.5 and FIG.6.

First, each component included in an intelligent terminal in this application example will be described.
Personal Private Domain (PPD) system: the standard operating system
Secure Enterprise Domain (SED) system: the secure operating system
Radio Interface Layer (RIL) module: the wireless interface adaption layer module
Irtualizer module: the virtual layer module
Phone module: a telephone module in the Application layer of Android system
vPhone module: a virtualized phone module in the System layer of Android system (similar to the service module of the second embodiment)
modem module: module unit
Subscriber Identity Module(SIM): SIM card

In the following, "SIM" followed by a number indicates a different SIM card, for example, "SIM 1" and "SIM 2" mentioned below are two different SIM cards that are independent of each other and are located in the module unit.

According to the embodiment of the present disclosure, it is provided an intelligent terminal with dual operating systems and supports dual card dual standby call. The structure of the intelligent terminal is illustrated in FIG.5. This application example is achieved by binding contacts and then controlling contact calls through the vPhone.

One contact can be bound to only one operating system among the PPD system and the SED system, and the same contact can only appear in one operating system. When there is a contact call, the vPhone module of the PPD system will control uniformly and perform a ringing process at a corresponding operating system automatically based on the operating system to which the contact belongs. In this scheme, data is safely isolated on the basis of contacts, and this can allow users to know exactly what information needs to be protected; therefore, user data protection can be more secure and reliable.

The terminal includes a modem module, a vPhone module, a RIL module, and a Phone module in the application layer. Corresponding functions of each module are as follows.

The phone module in the application layer is an upper layer module and is configured to provide a functional interface to applications.

The RIL module is configured to transmit a request generated in the upper layer phone module to the modem module; and transmit data reported by the modem module to the upper layer Phone module.

The Virtualizer module is configured to allocate memory and hardware resources so as to load and operate the dual operating system, such that two operating systems can operate simultaneously. The Virtualizer module is further configured for the communication between the vPhone module and the RIL module, so as to achieve the isolation of the PPD system and the SED system.

The vPhone module is located in the PPD system. When there is contact call, the vPhone module can perform the ringing process in a corresponding system automatically according to the operating system to which the contact belongs.

The modem module is mainly configured to complete communication, SIM card management-related functions.

Based on the function of the above-mentioned modules, as illustrated in Fig. 6, the secure call process of the intelligent terminal of this application example is as follows.

Step 1, suppose the terminal is currently in the PPD system, and at this time, there is a contact call.

Step 2, the modem module report the information of the call to the RIL module of the PPD system.

Step 3, the RIL module of the PPD system transmits the information to the vPhone module of the PPD system.

Step 4, the vPhone module of the PPD system determines whether the number that the call from ("number" for short) is bound to an operating system; if yes, proceed to Step 5, otherwise, the vPhone module will control the RIL module of the PPD system to process as a strange number, and proceed to Step 8.

Step 5, the vPhone module determines whether the number is bound to the SED system; if yes, proceed to Step 6; otherwise, the number is bound to the PPD system, and proceed to Step 8.

Step 6, the vPhone module informs the RIL module of the SED system to report data to the Phone module of the SED system.

Step 7, the Phone module of the SED system performs the ringing process and the process ends.

Step 8, the vPhone module controls the RIL module of the PPD system to report data to the Phone module of the PPD system.

Step 9, the Phone module of the PPD system performs the ringing process and the process ends.

According to the dual system-based communication method and the terminal, basic data is isolated between two operating systems on the basis of contacts, and information of each contact is bound to a corresponding operating system. When a communication request is received, communication is conducted in an operating system corresponding to a contact initiating the communication request, such that an incoming call from a contact of a secure system is preferentially switched to a secure operating system for communication and it is ensured that relevant information is isolated and stored in the secure system. The present disclosure still has advantages of simple, safe, and easy to expand.

While the present disclosure has been described in detail above with reference to the exemplary embodiments, the scope of the present disclosure is not limited thereto. As will occur to those skilled in the art, the present disclosure is susceptible to various modifications and changes without departing from the spirit and principle of the present disclosure. Therefore, the scope of the present disclosure should be determined by the scope of the claims.

## Claims

1. A dual system-based communication method, comprising:
in a terminal having dual operating systems, binding each contact information to a corresponding operating system; and
in the situation that the dual operating systems operate simultaneously, when a communication is received, conducting communication in an operating system corresponding to a contact initiating the communication.

2. The dual system-based communication method of claim 1, wherein the source of the contact information comprises: contact information stored in the dual operating systems, and contact information stored in a Subscriber Identity Module (SIM) card.

3. The dual system-based communication method of claim 1, wherein the process that the dual operating systems operate simultaneously comprises:
loading a virtual layer module by a boot loader; and
allocating memory and hardware resources through the virtual layer module, so as to load and operate the dual operating systems.

4. The dual system-based communication method of claim 3, wherein the process of conducting communication in the operating system corresponding to the contact initiating the communication request when the communication request is received comprises:
among the dual operating systems, a first operating system is provided with a service module; the service module is configured to interact with both a first wireless interface adaptation layer module of the first operating system and a second wireless interface adaptation layer module of a second operating system; the service module is further configured to store a binding correspondence relationship between each contact information and a corresponding operating system;
transmitting the communication request received to the service module through the first wireless interface adaptation layer module of the first operating system by a module unit; and
judging whether the operating system bound to the contact initiating the communication request is the first operating system or the second operating system by the service module; if it is the first operating system, the service module will inform the first wireless interface adaptation layer module to invoke a communication module in the first operating system for communication; if it is the second operating system, the service module will inform, through the virtual layer module, the second wireless interface adaptation layer module to invoke a communication module in the second operating system for communication.

5. The dual system-based communication method of claim 4, wherein the first operating system is configured to be a standard operating system and the second operating system is configured to be a secure operating system.

6. The dual system-based communication method of claim 5, further comprising:
conducting communication in the standard operating system if the communication request is received from a stranger.

7. The dual system-based communication method of claim 6, wherein the process of conducting communication in the standard operating system if the communication request is received from the stranger comprises:
transmitting the communication request sent from the stranger to the service module through the first wireless interface adaptation layer module of the standard operating system by the module unit when the communication request is received; and
determining that information of the stranger does not bound to any operating system and informing the first wireless interface adaptation layer module to invoke the communication module of the standard operating system for communication by the service module.

8. The dual system-based communication method of claim 1, wherein the type of the communication request comprises an incoming call or a short message; and the contact information comprises a contact phone number.

9. The dual system-based communication method of any of claims 1-8, wherein the module unit is configured to support the following three operating modes: (1) single SIM card single standby mode; (2) dual SIM card dual standby mode; and (3) dual SIM card single standby mode.

10. A terminal with dual operating systems, comprising:
a memory, configured to store a binding correspondence relationship between each contact information and an operating system, wherein in the binding correspondence relationship, each contact information corresponds to one operating system respectively; and
a processor, configured to communicate in an operating system corresponding to a contact initiating the communication request upon reception of the communication request, in the situation that the dual operating systems operate simultaneously.

11. The terminal of claim 10, wherein the source of the contact information comprises:
contact information stored in the dual operating systems, and contact information stored in a Subscriber Identity Module (SIM) card.

12. The terminal of claim 10, wherein the process that the dual operating systems operate simultaneously comprises:
loading a virtual layer module by a boot loader; and
allocating memory and hardware resources through the virtual layer module, so as to load and operate the dual operating systems.

13. The terminal of claim 12, wherein the processor is configured to:
among the dual operating systems, a first operating system is provided with a service module; the service module is configured to interact with both a first wireless interface adaptation layer module of the first operating system and a second wireless interface adaptation layer module of a second operating system; the service module is further configured to store a binding correspondence relationship between each contact information and a corresponding operating system;
transmit the communication request received to the service module through the first wireless interface adaptation layer module of the first operating system by a module unit; and
judge whether the operating system bound to the contact initiating the communication request is the first operating system or the second operating system by the service module; if it is the first operating system, the service module will inform the first wireless interface adaptation layer module to invoke a communication module in the first operating system for communication; if it is the second operating system, the service module will inform, through the virtual layer module, the second wireless interface adaptation layer module to invoke a communication module in the second operating system for communication.

14. The terminal of claim 13, wherein the first operating system is configured to be a standard operating system and the second operating system is configured to be a secure operating system.

15. The terminal of claim 14, wherein the processor is further configured to conduct communication in the standard operating system if the communication request is received from a stranger.

16. The terminal of claim 15, wherein the processor is further configured to:
transmit the communication request sent from the stranger to the service module through the first wireless interface adaptation layer module of the standard operating system by the module unit when the communication request is received; and
determine that information of the stranger does not bound to any operating system and inform the first wireless interface adaptation layer module to invoke the communication module of the standard operating system for communication by the service module.

17. The terminal of claim 10, wherein the type of the communication request comprises an incoming call or a short message; and the contact information comprises a contact phone number.

18. The terminal of any of claims 10-17, wherein the module unit is configured to support the following three operating modes: (1) single SIM card single standby mode; (2) dual SIM card dual standby mode; and (3) dual SIM card single standby mode.
